# EUROPEAN PATENT APPLICATION

(11) **EP 1 763 989 A1**
(43) Date of publication of application: **21.03.2007**
(21) Application number: 06120699.1
(22) Date of filing: 14.09.2006
(51) Int. Cl.: A01G 9/14

(54) **Cultivation system and method for the cultivation of crops**

(30) Priority: 14.09.2005 NL 1029956
(71) Applicant: W/M Systems B.V., 2661 EP Bergschenhoek (NL)
(72) Inventor: de Jager, Maarten, 2587 TX, 's-Gravenhage (NL); Brugman, Thomas Gerardus, 2715 AN Zoetermeer (NL)
(74) Representative: van Westenbrugge, Andries

(57) **Abstract**

Cultivation system, wherein crops are cultivated in a cultivation trough. The cultivation troughs are supported on a greenhouse construction. In contrast to the prior art, the support is not a rigid construction but rather a movable construction, as a result of the fact that there are supported on the greenhouse construction carriages which are movable with respect to the greenhouse construction, the troughs being fastened to the carriages in a hanging manner. More particularly, carriages of this type are supported on lattice beams of the greenhouse construction. Provisions are made for moving a series of carriages and for varying the distance between the carriages. It is thus possible to grow crops of considerable length such as tomatoes, peppers and cucumbers.

## Description

The present invention relates to a cultivation system comprising a plant carrier, such as a trough, and a carrying construction for said plant carrier, which carrying construction comprises a support attached above the plant carrier and suspension members which extend downward therefrom and are connected to said plant carrier. Cultivation systems of this type are generally known in the art. Hanging troughs are used in all types of cultivation. A particular variation is the construction wherein the weight is determined in a simple manner. Tomatoes, peppers and the like are cultivated in hanging troughs. The troughs are fastened to the frame construction of a greenhouse with suspension cables and/or rods.

Also known in the art are trough constructions which rest on the floor of a greenhouse. More particularly, constructions are known wherein troughs of this type are accommodated in a greenhouse in a manner such that they may be rolled away. This allows, on the one hand, the mutual distance between the troughs to be varied during cultivation and, on the other hand, the trough to be positioned in another area or moved to a processing area, respectively, as a function of the stage of development of the respective crops.

The aim of the present invention is to utilise with hanging troughs the advantages known in the use of cultivation troughs resting on a floor and thus to eliminate the drawbacks of both hanging troughs and troughs supported on the ground.

This aim is realised with an assembly as described above in that said support comprises a carriage.

According to the present invention, movable carriages are attached at the top of a cultivation area, such as a greenhouse. One or more plant carriers, such as troughs, are suspended from said movable carriages. The weight of the troughs is accordingly accommodated by the greenhouse construction and no other separate stable supports, which block out a lot of light, are required, for example for carrying the crops. This has the advantage that the positive characteristics which may be achieved with movable troughs are also realised with a trough of this type. Moreover, there is the further advantage that requirements are no longer set to the soil. After all, in the case of a comparatively soft soil, the roof construction of a greenhouse will generally be well founded. Suspending the troughs indirectly from this roof construction will render the subsiding of the ground between the supports for the roof irrelevant. The construction according to the invention is particularly stable. In addition, the carriages do not contain any crops which might adversely affect the moving parts thereof, thus increasing the service life thereof. Furthermore, the absence of constructions on the ground makes it easier to walk around and promotes hygiene, thus improving the environment, the working conditions and staff health. The present invention provides numerous possibilities which were previously inconceivable in the prior art. A first possibility is the cultivation of comparatively high-growing crops such as peppers, cucumbers and tomatoes. Crops of this type grow upward along wires or other constructions which, in accordance with the present invention, may extend between the trough and the carriage. It is now possible to move crops of this type as a function of the stage of development in order, for example, to simplify harvesting. It is thus possible to harvest in particular areas, the harvesting person or means being at a higher level than the trough, thus obviating the need for inconvenient and unsafe manoeuvres in order to reach, for example, tomatoes. Both aspects are further promoted as a result of the fact that the troughs may be supplied in individualised form, so the harvesting person or means does not have to move between the troughs.

Moreover, the present invention allows the distance between the troughs and thus between the crops to be varied as a function of the stage of growth and other requirements.

Preferably, the carriage according to the present invention is constructed in such a way that light is cast onto the crops as far as possible unobstructed. In other words, the carriage consists of a comparatively slim construction. A slim construction of this type may be realised by constructing the carriage from one or more elongate beams. According to an advantageous embodiment, each beam consists of a comparatively thin rectilinear portion extending between two opposing sets of wheels of the carriage. This connection portion rests on a reinforcement portion which is clamped between the extremities of the connection portion and tensioned by one or more vertical spacers. This type of bridge construction may be configured with a comparatively small diameter.

A further method for obstructing the light cast onto the crops as little as possible consists in the construction of the rails along which the carriages are able to move. According to a particular variation of the invention, rails of this type preferably form part of the (lattice) beam or truss which is present in each greenhouse construction and extends perpendicularly to the longitudinal direction of the troughs attached between adjacent roofs. Lattice beams of this type rest on the (well-founded) columns which are present in the greenhouse.

If various carriages attached to a rail system are provided, spacers can function therebetween. If there are a series of carriages, driving of the "rearmost" carriage of a series may cause the entire series to move, at maintaining the desired distance between the carriages, which distance is determined by the above-mentioned spacers. It is possible to configure the spacers in a variable manner, for example such that they may be folded away, so the distance may be varied as a function of the stage of growth of the cultivation or other circumstances. This can be effected mechanically and/or manually in any manner known in the art. According to a further variation of the present invention, it is possible for the carriages to move in part within one another, thus allowing the number of sets of wheels to be restricted. A construction of this type for moving carriages within/above one another is known from Netherlands patent 1 020 882 for a trough system which rests on the floor of a greenhouse. A construction of this type can also be used with carriages according to the present invention, which rest at a considerable height on the roof construction of a greenhouse.

The invention has the further advantage of allowing optimum use of the space within a greenhouse. There is no need for separate pathways. In principle, the entire greenhouse may be filled with troughs suspended from carriages and the movement of one or more troughs may, if necessary, provide a conveyance path.

Moreover, it is possible to establish in the various portions of a greenhouse or other cultivation area a climate optimised on the basis of the stage of growth of the respective crops. Once the crop stage requiring a specific climate has been reached, the climate is no longer adapted but the crops are moved to the respective area.

As indicated above, it is possible to treat the crops in a separate area and the fruits may, for example during harvesting, be removed directly without having to be transferred. The harvesting staff or means is able optimally and without particular effort to approach from all sides the crops located in a trough and the working area may have an optimised climate for the person carrying out the processing, free from noxious substances.

It will be understood that the carriages may be moved in a completely automated manner. Reference is made, in particular, to the procedure for moving troughs and/or (roller) containers.

Although the invention has been described hereinbefore with reference to a trough, it will be understood that other types of plant carriers, such as containers (tables), are also possible. In addition, a group of crops may be cultivated on a substrate in the trough but it is also possible to arrange pot plants therein. Constructions conventional in the prior art, such as ebb-and-flow systems and other watering systems, may be provided. The trough may then be used as a means for discharging liquid such as water and, moreover, measurements may be taken with regard to the weight of the trough in order to monitor the growth of the crops. Liquids may be supplied both at the level of the troughs and at the high level of the carriages. There may also be provided automatically-functioning coupling means which become active when carriages are positioned against one another, thus producing a liquid connection.

Also possible are constructions with which a carriage may be delivered from the rail system to a construction allowing movement in the direction perpendicular to the rail system, i.e. parallel to the longitudinal centre line of the troughs.

Although the invention has been described hereinbefore with reference to the suspension of the carriages from a roof construction of a greenhouse, it is also possible to attach other constructions from which the carriages may be suspended. This may be realised both within and outside a cultivation area.

The invention will be described hereinafter in greater detail with reference to an illustrative embodiment represented in the drawings, in which:
Figure 1 is a schematic perspective view of a greenhouse provided with the cultivation system according to the present invention;
Figure 2 shows detail II from Figure 1;
Figure 3 shows detail III from Figure 1;
Figures 4a to c show various positions of two carriages;
Figure 5 is a perspective plan view of the cultivation system in combination with a conveyor; and
Figure 6 shows the coupling of the cultivation system to a liquid connection.

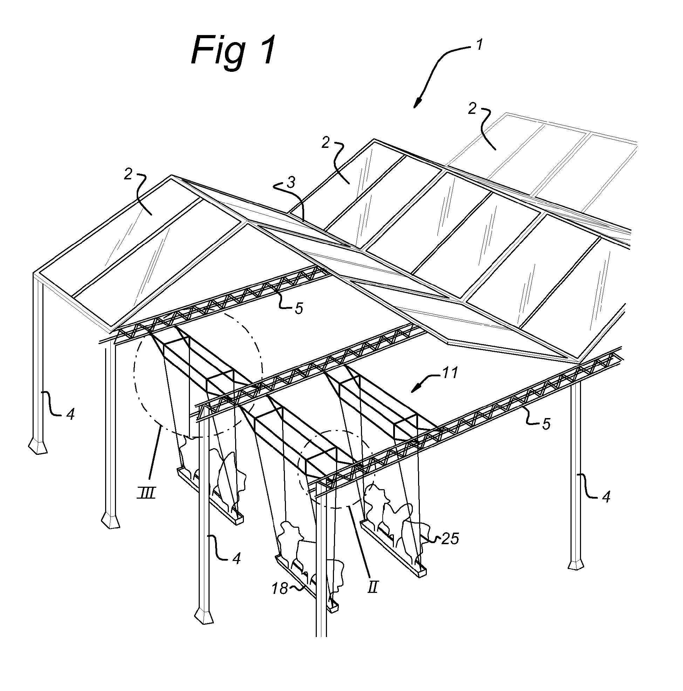

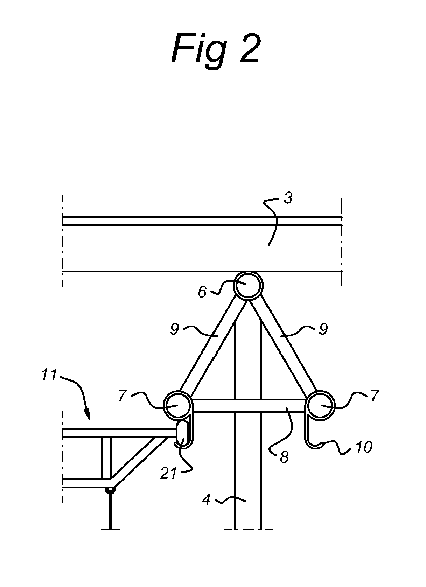

In Figure 1, reference numeral 1 denotes a greenhouse. It will be understood that the invention relates to any cultivation area. The greenhouse is provided with a number of roofs 2 between which there extends a respective trough 3. Below the trough 3 there are attached columns 4 and also trusses, such as lattice beams 5, extending perpendicularly to the trough. Each lattice beam consists, as may be seen in Figure 2, of a single upper beam 6 and two lower beams 7 located at the same height but set apart from each other. Between the upper beam 6 and lower beam 7 there are arranged respective connections 9, whereas connections 8 are arranged between the lower beams 7. These may be simple bars or strips. Preferably, both types of beam are respectively made from solid material in order to limit the loss of light as much as possible.

The lower profiles 7 are provided with an extension 10 which acts as a C-shaped profile or rail respectively.

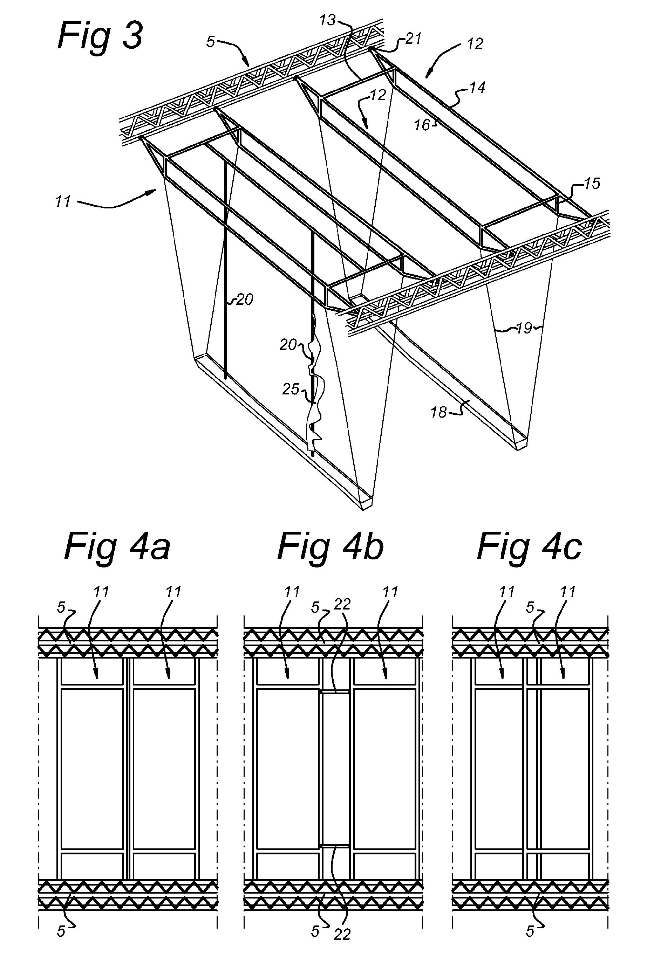

Figures 2 and 3 show that carriages 11 extend between set-apart lattice beams 5. Each carriage consists of two spaced beams 12. Each beam 12 is provided, in proximity to its extremities, with wheels 21 which are movable in two parallel rails 10 opposing each other and attached at the same height. Each beam 12 consists of a horizontally extending connection portion 14 and a reinforcement portion 16 which extends from the ends of said connection portion and is kept at a distance from the connection portion 14 by substantially vertical spacers 15. It will be understood that the reinforcement portion 16 may also extend on the upper edge of the connection portion 14. Two set-apart beams 12 are held in the desired position by connection profiles 13 provided on opposing sides of the carriage. A beam may thus be constructed using little material, i.e. with little loss of light.

Fastened to the carriages are suspension cables 19 (these are loaded only with tensile forces). In a variation, the cables may intersect one another in proximity to the free lower end thereof. Fastened to said suspension cables at a lower level are troughs 18. The distance between the carriages 11 and the troughs 18 is preferably greater than 2m. Adjustment mechanisms may optionally be provided in the suspension cables in order to adjust the position of the troughs. The troughs may be hung purely horizontally but it is also possible to position the troughs at a slight inclination for discharging water. Moreover, there may extend between the carriages 11 and the troughs growing poles 20. These poles also function to transfer the weight of the troughs to the carriages 11.

Each carriage is provided, in proximity to one of its extremities, with stops 22. Figure 4a shows that said stops may be folded away. In such a case, the carriages 11 are positioned tightly against one another. If the stops 22 are folded out, the situation shown in Figure 4b arises. Also conceivable is the situation wherein one carriage partially "overlaps" another carriage, as a result of which only one set of wheels per carriage is loaded in the event of considerable movement (Figure 4c).

With the present invention, it is possible to move the carriage furthest to the right in Figure 4 by exerting a compressive force on the carriage furthest to the left. Both operations may be carried out, using a motor, in any manner conceivable in the prior art.

The troughs 20 contain crops 25, such as tomatoes and the like.

The present invention allows the suspended troughs to be moved as desired, either to a processing area or to another cultivation area. The term "cultivation area" refers to both a covered area (greenhouse) and the open air. This movement may take place with a group of troughs but individualised movement is also possible.

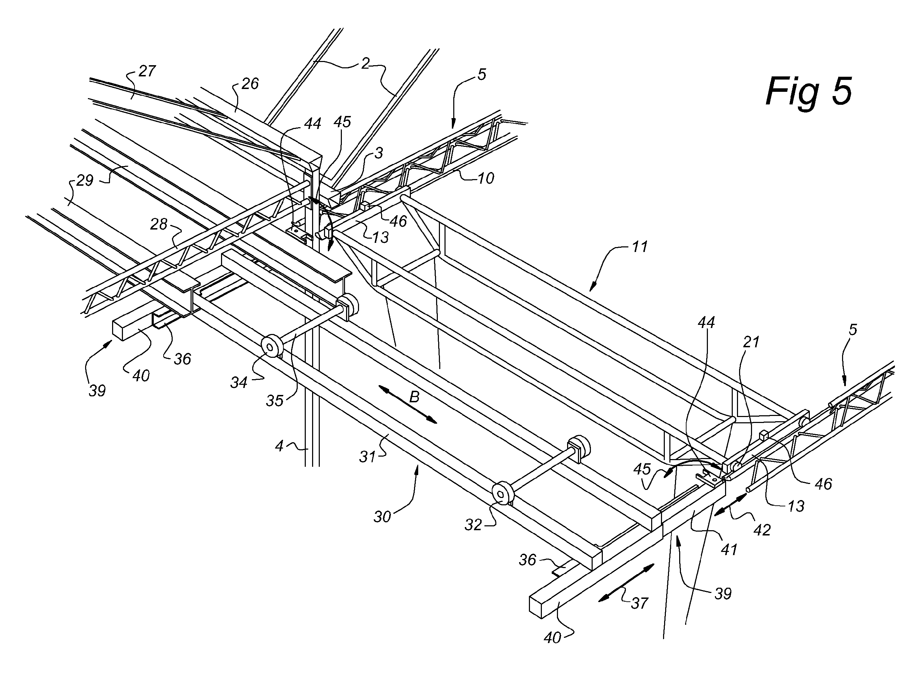

Figure 5 shows a further embodiment of the present invention. In this case, components whose functions correspond to those of the components in the previous figures are provided with the same reference numerals. Each connection profile 13 is provided with a catch cam 46. In this embodiment, trough 3 is positioned next to column 4, the column 4 extending upward in the trough. Attached to the raised portion is a raised roof with its own trough 26. The roof construction thereof is indicated schematically by reference numeral 27. In the raised portion of the greenhouse there is an upper lattice beam 28 provided with rails 29 suspended therefrom. The rails extend perpendicularly to rails 10 and extend over the entire length of the respective roof 27. An auxiliary carriage 30 comprising a frame 31 is movable, via the wheels 32, 34 attached thereto, in rails 29 in the directions indicated by arrow B. The wheels 34 of the auxiliary carriage 30 are driven. The drives means required for this purpose is not shown but may, for example, function on the common axle 35 of the wheels.

Below the frame 31 rails 36 are arranged which may be brought into line with the rails 10. The rails 36 are able to move in the direction of arrow 37 in order to provide connection to the rails 10. The rails 36 may be moved mechanically (not shown).

Attached to the frame 31 is a mechanism 39 (not set out in detail) for the transferring of the carriage 11 from the rails 10 to the rails 36 or from the rails 36 to the rails 10. Each mechanism 39 comprises a fixed housing 40 fastened to the frame 31. Within the housing, a telescoping arm 41 is able to move in the direction of arrow 42. The arms 41 are moved in a manner not illustrated in detail.

The extremity of the arm 41 is provided with a catch 44 which is rotatable in the direction of arrow 45. Assuming that the carriage 11 is in the correct position, the cam 46 may thus be engaged or not engaged as required. The catch 44 is moved in a manner not illustrated in detail. Vertical guide wheels 47 are provided at the location of the wheels 32 and 34. These guide wheels 47 are preferably attached in such a way that when the carriage 11 is transferred from the rails 36 to the rails 10 or *vice versa,* the wheels are located substantially below the lattice beam 28, thus allowing the forces 20 acting thereon to be transferred as directly as possible to the lattice beam 28.

In a nursery a plurality of rail systems 10 is provided located parallel to one another or opposing one another, or both. On each rail system there is a series of carriages 11. A rail system 29, located perpendicularly to said rail systems, extends along the extremities of said rail systems. An auxiliary carriage 30 is able to move above said rail system 29. The rails 36 of said auxiliary carriage are able to connect to each of the rail systems 10 located along the rail system 29. The catches 44 of the transferring means 39 of the auxiliary carriage are able to engage with the catch cams 46 of each carriage 11 provided on a rail system 10.

When the rails 10 of a rail system and the rails 36 are interconnected, a carriage 11 may be transferred by the transferring means 39 from the rails 10 to the rails 36. The auxiliary carriage 30, comprising therein the transferred carriage 11 with the non-connected rails 10 and 36, is then able to move via the rail system 29 to another rail system 10, where it connects with the rails 36 to the rails 10 of the other rail system. When the rails 10 of the rail system and the rails 36 are interconnected, the carriage 11 may be transferred by the transferring means 39 from the rails 36 to the rails 10. If there are a series of carriages 11, positioned one against the other, on the rail system 10, the transferring means 39 are able to move the carriage 11 from the rails 36 toward said series and push the entire series upward, thus moving it above the rail system.

If an auxiliary carriage 30 is able to move at both extremities of a rail system 10, at one extremity one auxiliary carriage 30 can add a carriage 11 to a series of carriages 11 provided on the rail system and at the other extremity the other auxiliary carriage 30 can remove a carriage 11 from said series. Once both auxiliary carriages 30 have been moved to the extremities of a single other rail system, the one auxiliary carriage 30 can remove a carriage 11 from a series of carriages 11 provided on the other rail system and the other auxiliary carriage 30 can add to the series the aforementioned carriage 11 removed from a rail system. All of the carriages 11 provided are thus able to circulate through the cultivation station and thus pass fixed points at which crop operations, such as product harvesting, may be carried out.

If rail systems 10 are located on opposing sides of a rail system 29, an auxiliary carriage 30, which is movable in the rail system 29, can remove a carriage 11 from a rail system 10 on the one side of the rail system 29 and position it on a rail system 10 on the other side of said rail system 29, wherein said rail systems 10 do not have to be located in one another's extension.

For the purpose of the movement capacities and/or logistical possibilities, the transferring means 39 may in an advantageous variation be attached not to an auxiliary carriage 30 but to a fixed construction, such as that of a greenhouse. Also for the purpose of movement capacities and/or logistical possibilities, it may be advantageous if a plurality of auxiliary carriages 30 are able to move within a rail system 29. Furthermore, for the purpose of movement capacities and/or logistical possibilities, it may be advantageous if a plurality of rail systems 29 is provided directly adjacent to one another and parallel to one another.

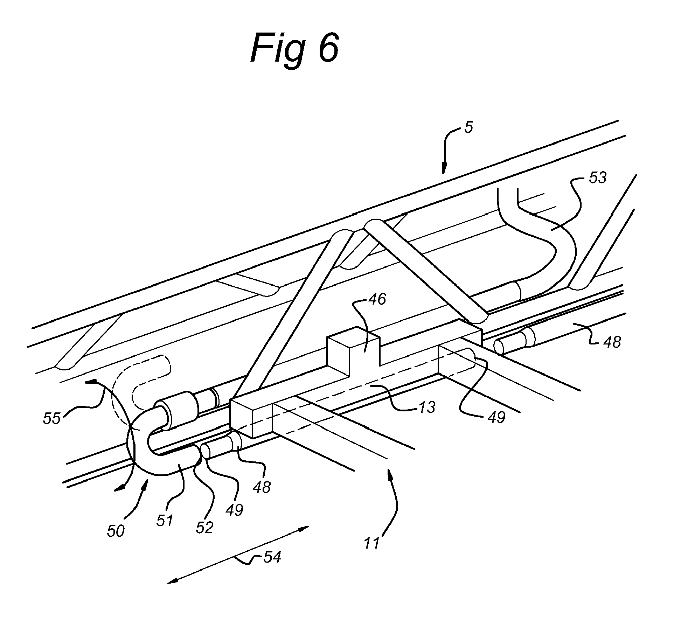

Figure 6 shows a detail of a watering system in combination with the movable carriage according to the present invention. In this case, too, the same reference numerals have as far as possible been used as in the earlier figures. The carriage 11 is provided in proximity to a connection profile 13 with a liquid conduit 48. This conduit 48 has at both ends a connection 49 which, if no further action is taken, is configured so as to close automatically.

Further carriages may be provided with corresponding conduits 48 and if the carriages 11 are positioned against one another, coupling between adjacent connections 49 may be provided.

A fixedly disposed mechanism denoted by reference numeral 50 is fastened to the lattice beam 5. This mechanism comprises a conduit 51 provided with a 180° bend comprising a connection 52 which, on the one hand, closes automatically and, on the other hand, may be coupled to the connection 49. The other end of the conduit 51 is connected to a liquid source denoted by reference numeral 53. The conduit 51 is able to rotate in the directions indicated by arrow 55 and to move translationally in directions 54.

When the carriages 11 are moved, the connection 52 is turned away so as to allow the conduits 48 to pass unimpeded. If irrigation is required, the respective carriage is positioned in such a way that rotation and translational movement of the conduit 51 allow the connection 52 to be coupled to the connection 49 of the conduit 48. Further carriages 11 may be provided with corresponding conduits 48 and if the carriages are positioned against one another, coupling between adjacent connections 49 may be provided.

For discharging liquid not absorbed by the crops, the plant carrier hanging below a carriage 11 may be provided with one or more discharge openings and may be provided therebelow with a collecting trough having a conduit system connected thereto.

On reading the foregoing description, a person skilled in the art will immediately think of variations which lie within the scope of the appended claims. Instead of being provided with the rails 36 and transferring means 39, a carriage 30 may thus be provided with movable carrying arms and with a mode of operation comparable to that of a forklift truck. Instead of consisting of conduits and coupable connections, the watering system may thus consist of fixedly disposed liquid outlets and collecting vessels attached to the carriages 11. Instead of collecting troughs, conduits comprising coupable connections may be used for discharging liquid not absorbed by the crops. The same applies to the discharge means. Protection is also explicitly sought for embodiments which are incorporated in the subsequent claims independently of that which is described in Claim 1.

## Claims

1. Assembly comprising a cultivation system comprising a plant carrier, such as a trough (18), and also a carrying construction for said plant carrier, which carrying construction comprises a support (11) arranged above the plant carrier and suspension members (19) which extend downward therefrom and are connected to said plant carrier, **characterised in that** said support comprises a carriage (11) and also a rail system (10) supporting the carriage on opposing sides.

2. Assembly according to Claim 1, wherein said carriage comprises an elongate beam (12) provided on opposing sides with a respective sets of wheels.

3. Assembly according to Claim 2, wherein said elongate beam (12) comprises a connection portion (14) extending rectilinearly between said sets of wheels and a reinforcement portion (16) which is connected to the extremities of said connection portion and extends thereabove or therebelow, wherein between said extremities at least one vertically extending spacer (15) is attached between said connection portion and said reinforcement portion.

4. Assembly according to one of the preceding claims, wherein the length of said suspension members is adjustable in order to change the position of said plant carrier.

5. Assembly according to Claim 4, comprising two carriages (11), wherein said carriages are provided with mutually cooperating stop means (22).

6. Assembly according to Claim 5, wherein the effective length of said stop means (22) is variable.

7. Assembly according to one of the preceding claims comprising a greenhouse, wherein said greenhouse is provided with liquid supply means which are fastened thereto and comprise coupling means and said carriage is also provided with liquid supply means provided with coupling means, wherein said coupling means of said liquid supply means arranged in the greenhouse and said couplings to said carriages may be joined together.

8. Assembly according to one of the preceding claims, comprising a number of carriages, wherein the spacing between the carriages is mechanically adjustable.

9. Assembly according to one of the preceding claims, wherein said rail system (10) connects to a further conveyance system (36), said further conveyance system (36) being constructed for the receiving/delivering of a carriage from/to said rail system (10).

10. Assembly according to Claim 9, wherein said further rail system (36) connects substantially perpendicularly to said rail system (10).

11. Assembly according to Claim 9 or 10, comprising a further conveyance means (30) for the receiving of said carriage (11) and the transferring thereof to said further conveyance system (36).

12. Method for the cultivation of crops, which crops are accommodated in a carrier suspended in a cultivation area, said crops being moved with said hanging carrier into said cultivation area, **characterised in that** various carriers suspended adjacent to one another are provided, the distance between said carriers being altered.

13. Method according to Claim 12, wherein said crops are moved with said carriers to a processing area.

14. Method according to one of claims 12 or 13, including the cultivation of peppers, cucumbers and/or tomatoes.
